# EUROPEAN PATENT APPLICATION

(11) **EP 4 035 944 A1**
(43) Date of publication of application: **03.08.2022**
(21) Application number: 20869870.4
(22) Date of filing: 24.08.2020
(51) Int. Cl.: B60R 11/02, F16B 5/02, F16B 5/06, H01Q 1/22

(54) **ONBOARD APPARATUS AND ATTACHMENT SECTION FOR ONBOARD APPARATUS**

(30) Priority: 27.09.2019 JP 2019177707
(71) Applicant: YOKOWO CO., LTD., Kita-ku Tokyo 114-8515 (JP)
(72) Inventor: TAMAI, Ryota, Tomioka-Shi Gunma 370-2495 (JP); AMBE, Tomio, Tomioka-Shi Gunma 370-2495 (JP)
(74) Representative: Gunzelmann, Rainer
(86) International application number: PCT/JP2020/031780
(87) International publication number: WO 2021/059821

(57) **Abstract**

Provided is a device or the like for vehicle that can easily attach two electronic devices to the vehicle.

A device for vehicle 1 includes a first electronic device (antenna unit) 10, a second electronic device (signal processing unit) 50 electrically connected to the first electronic device 10, and a mounting unit 30 interposed between the first electronic device 10 and the second electronic device 50. The first electronic device 10 is attached to a vehicle in a positional relationship in which the first electronic device 10 and the mounting unit 30 sandwich at least part of the vehicle roof 90. The second electronic device 50 is attached to the mounting unit 30 in a positional relationship in which the second electronic device 50 and the vehicle roof 90 sandwich at least part of the mounting unit 30.

## Description

### Technical field

The present invention relates to a device for vehicle.

### Background Art

In the related art, as in Patent Literature 1, an antenna device for vehicle including an antenna unit and a signal processing unit has been proposed.

### Citation List

### Patent Literature

Patent Literature 1: JP 6314277 B1

### Summary of Invention

### Technical Problem

However, the connection between the antenna unit, the vehicle roof, and the signal processing unit has not been sufficiently considered.

Therefore, an object of the present invention is to provide a device or the like for vehicle in which two electronic devices can be easily attached to the vehicle.

### Solution to Problem

A device for vehicle according to the present invention has a first electronic device, a second electronic device electrically connected to the first electronic device, and a mounting unit interposed between the first electronic device and the second electronic device. The first electronic device is attached to a vehicle in a positional relationship in which the first electronic device and the mounting unit sandwich at least part of the wall-shaped member of the vehicle. The second electronic device is attached to the mounting unit in a positional relationship in which the second electronic device and the wall-shaped member sandwich at least part of the mounting unit.

Using the mounting unit provided between the second electronic device and the wall-shaped member of the vehicle, the first electronic device is attached to the vehicle in a positional relationship in which the first electronic device and the mounting unit sandwich at least part of the wall-shaped member of the vehicle, so that the first electronic device is fixed to the wall-shaped member of the vehicle. The second electronic device is attached to the mounting unit in a positional relationship in which the second electronic device and the wall-shaped member sandwich at least part of the mounting unit, so that the second electronic device is fixed to the mounting unit. As a result, the device for vehicle including the first electronic device and the second electronic device can be easily attached to the vehicle.

### (Effects)

Using the mounting unit 30 provided between the second electronic device 50 and the vehicle roof 90, the first electronic device 10 is fixed to the vehicle roof 90 in the first stage (first step, second step), and the second electronic device 50 is fixed to the mounting unit 30 in the second stage (third step). As a result, the device for vehicle 1 including the first electronic device 10 and the second electronic device 50 can be easily attached to the vehicle.

Preferably, the first electronic device is electrically connected to at least part of the wall-shaped member via the mounting unit.

When the first electronic device and the second electronic device are attached via the mounting unit, the electrical connection (grounding) between the first electronic device and the wall-shaped member of the vehicle, and the electrical connection between the first electronic device and the second electronic device can be made.

More preferably, the wall-shaped member is a roof of the vehicle. The mounting unit includes a main body that covers part of the second electronic device in a positional relationship in which the main body does not come into contact with the roof, and a contact portion that is provided at a position closer to the roof than the main body and comes into contact with the roof.

It can become in a state in which there is no electrical connection between the mounting unit and the vehicle at a location other than the contact portion.

More preferably, an upper face of the second electronic device has a recess that accommodates part of the first fastening portion that fastens the first electronic device and the mounting unit.

After the installation is completed, it can become in a state in which the head portion of the first fastening portion is difficult to be touched from the outside.

Also, preferably, the main body has a leg that extends downward and faces a side of the second electronic device. The leg has a first arm. A second arm is provided on the side of the second electronic device. The second electronic device is attached to the mounting unit via the second fastening portion that penetrates the first arm and the second arm from below.

The first arm provided on the leg becomes in a state where the distal end portion of the first arm can move (flap) around the connection portion between the first arm and the leg due to elastic deformation. Therefore, it is possible to reduce the force applied to the connector when the second electronic device moves due to the vibration of the vehicle or the like.

More preferably, the main body has a flat face portion facing an upper face of the second electronic device, and the first arm is provided at a position lower than the flat face portion.

It is possible to provide a space for the distal end portion of the second fastening portion such as a clip to protrude between the first arm and the wall-shaped member of the vehicle.

Further, preferably, at least a pair of legs is provided in a positional relationship so as to sandwich the second electronic device.

When the second electronic device is attached to the mounting unit, the legs function as a guide, and fitting of the connector, positioning, and the like can be easily performed.

Further, preferably, the main body has a flat face portion facing an upper face of the second electronic device, and the flat face portion has a plate-shaped section. A distal end portion of the plate-shaped section is formed so as to be located below compared to a region, of the flat face portion, in contact with the contact portion.

Due to the inclination of the plate-shaped section, after the second electronic device is attached to the mounting unit, the distal end portion of the plate-shaped section pushes the second electronic device downward in the z direction. As a result, the distal end portion of the plate-shaped section is maintained in contact with the second electronic device, and an abnormal noise between the mounting unit and the second electronic device due to the vibration of the vehicle or the like can be suppressed.

A mounting unit of the device for vehicle according to the present invention is a mounting unit of the device for vehicle including a first electronic device and a second electronic device that is electrically connected to the first electronic device. The first electronic device is attached to a vehicle in a positional relationship in which the first electronic device and the mounting unit sandwich at least part of a wall-shaped member of the vehicle. The second electronic device is attached to the mounting unit in a positional relationship in which the second electronic device and the wall-shaped member sandwich at least part of the mounting unit.

### Advantageous Effects of Invention

As described above, according to the present invention, it is possible to provide a device or the like for vehicle in which two electronic devices can be easily attached to the vehicle.

### Brief Description of Drawings

Fig. 1 is a side view of the device for vehicle of the present embodiment, showing a state before the first electronic device (antenna unit) and the mounting unit are attached to the vehicle roof.
Fig. 2 is a side view of the device for vehicle of the present embodiment, showing a state after the first electronic device and the mounting unit are attached to the vehicle roof and before the second electronic device (signal processing unit) is attached to the mounting unit.
Fig. 3 is a side view of the device for vehicle of the present embodiment, showing a state in which the first electronic device and the mounting unit are attached to the vehicle roof and the second electronic device is attached to the mounting unit.
Fig. 4 is a perspective view of the device for vehicle of the present embodiment when viewed diagonally from the rear.
Fig. 5 is a perspective view of the device for vehicle of the present embodiment when viewed diagonally from the front.
Fig. 6 is a perspective view showing a state before the mounting unit and the second electronic device of the present embodiment are attached.
Fig. 7 is a perspective view showing a state in which the mounting unit and the second electronic device of the present embodiment are attached.

### Description of Embodiments

Hereinafter, the present embodiment will be described with reference to the drawings. The embodiment is not limited to the following embodiments. Further, in principle, the contents described in one embodiment are similarly applied to other embodiments. In addition, each embodiment and each modification can be combined as appropriate.

### (Configuration of device for vehicle 1)

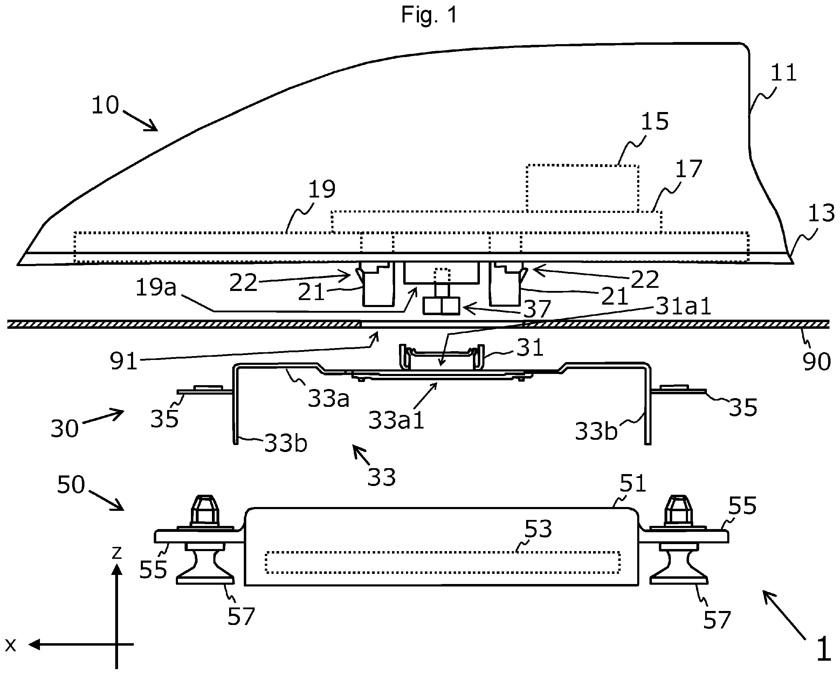

As shown in Figs. 1 to 7, a device for vehicle 1 of the present embodiment includes a first electronic device (antenna unit) 10, a mounting unit 30, and a second electronic device (signal processing unit) 50. The first electronic device 10 has an antenna case 11, a pad 13, an antenna element 15, a first substrate 17, a base 19, a connector 21, a temporary fixing claw 22, and a first fastening portion (bolt) 37. The mounting unit 30 has a contact portion (washer with claw) 31, a main body 33 (bracket), and a first arm 35. The second electronic device 50 has a housing 51, a second substrate 53, a second arm 55, and a second fastening portion 57.

The first electronic device 10 transmits a signal sent from the second electronic device 50 to the outside. Further, the first electronic device 10 receives a signal from the outside and transmits it to the second electronic device 50.

The mounting unit 30 is used to fix the first electronic device 10 at an upper portion, in a positional relationship that sandwiches the vehicle roof 90. Further, the mounting unit 30 is used to fix the second electronic device 50 at the lower portion.

The second electronic device 50 transmits a signal transmitted from the first electronic device 10 to the outside to the first electronic device 10. Further, the second electronic device 50 processes the signal received by the first electronic device 10. Further, the second electronic device 50 transmits/receives a signal to/from the gateway ECU (not shown) of the vehicle via a cable (not shown) of the in-vehicle local area network (LAN).

In order to explain the directions, the front-rear direction of the vehicle to which the device for vehicle 1 is attached will be described as the x-direction, the left-right direction perpendicular to the x-direction will be described as the y-direction, and the substantially vertical direction perpendicular to the x-direction and the y-direction will be described as the z-direction.

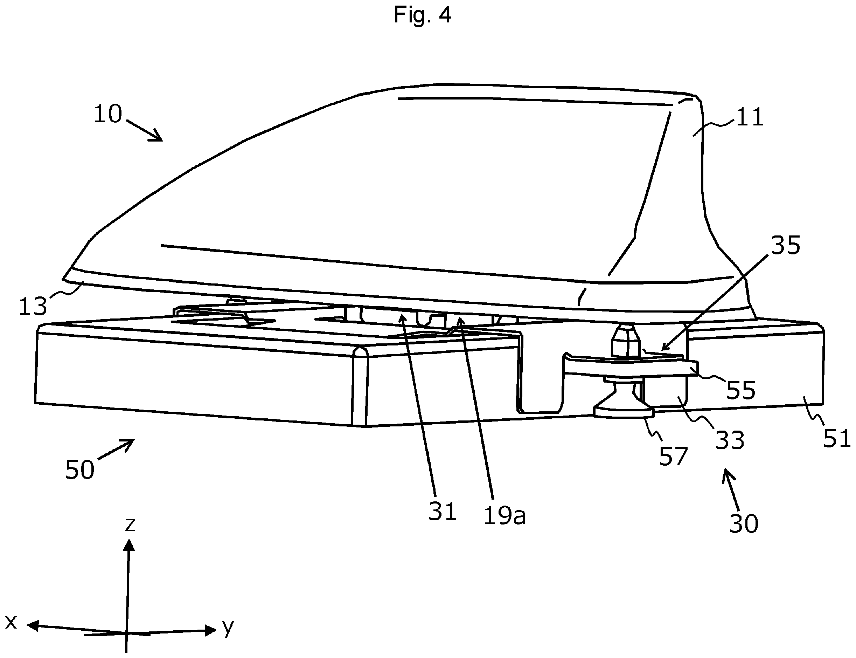

In Figs. 4 to 7, the directions indicated by the arrows on the xyz axis are defined as the forward direction, the right direction, and the upward direction, respectively. In addition, in Figs. 1 to 3, the members (antenna element 15, the first substrate 17, etc.) that are accommodated inside the antenna case 11 of the first electronic device 10 and invisible from the outside, and the member (second substrate 53) that is accommodated inside the housing 51 of the second electronic device 50 and invisible from the outside are shown by dotted lines. Further, in Fig. 4, the vehicle roof 90 is not shown.

### (Configuration of first electronic device 10)

Next, each part of the first electronic device 10 will be described.

### (Antenna case 11)

The antenna case 11 is made of a synthetic resin having radio wave transmission. The antenna case 11 has a shark fin shape in which the front in the x direction is inclined so as to be lower than the rear in the x direction, and both side faces are curved inward. The lower face of the antenna case 11 is open, and the base 19 is attached to the opening of the lower face. The antenna element 15 and the first substrate 17 are accommodated in the space formed by the antenna case 11 and the base 19.

### (Pad 13)

The pad 13 is an elastic member made of elastomer, rubber, or the like. The lower end peripheral edge portion of the antenna case 11 is attached to the upper part of the pad 13. The pad 13 closes the gap between the lower end peripheral edge portion of the antenna case 11 and the peripheral edge portion of the base 19.

### (Antenna element 15)

The antenna element 15 transmits and receives an electrical signal. For example, a planar antenna for receiving satellite broadcasts, a planar antenna for receiving position information (time information) from satellites such as a GPS, an antenna including capacitive loading element and coil for receiving AM/FM broadcasts, an antenna for V2X (vehicle-to-vehicle/road-to-vehicle communication), and an antenna for communication terminals, are conceivable, as the antenna element 15. The antenna element 15 is held on the base 19 via the first substrate 17 and the like. However, the antenna element 15 may be directly held by the base 19 without through the first substrate 17, or may be held by the inner wall of the antenna case 11. The antenna element 15 may be held by a holder attached to the base 19 or the like.

### (First substrate 17)

The electronic components related to antenna elements such as an amplifier circuit and a tuning circuit, the antenna elements 15 and the like are mounted on the first substrate 17, which is held on the base 19. The connector 21 is attached to the first substrate 17, and the first substrate 17 and the connector 21 are electrically connected to each other.

### (Base 19)

The base 19 is, for example, an antenna base, and is covered with the antenna case 11 from above in the z direction to form an accommodation space that accommodates the antenna element 15 and the like. The first substrate 17 is attached to the upper part of the base 19. The base 19 has a protrusion 19a protruding downward in the z direction, and a hole or a recess into which the first fastening portion 37 is screwed is provided inside the protrusion 19a.

Further, the first fastening portion 37 is screwed into the base 19. After the first electronic device 10 is temporarily fixed to the vehicle roof 90, the claw (first claw portion 32a) of the contact portion 31 of the mounting unit 30 come into contact with the lower face of the vehicle roof 90 due to the screwing of the first fastening portion 37. As a result, the first substrate 17 and the vehicle roof 90 are electrically connected (grounded) via the first substrate 17, the base 19, the contact portion 31, and the first fastening portion 37.

The base 19 may be made of a metal such as aluminum die-cast, or may be partially made of metal and the other part may be made of resin. The base 19 may be composed of resin only.

### (Connector 21)

The connector 21 is attached to the first substrate 17 and is used for electrical connection with the second substrate 53 of the second electronic device 50. The lower portion of the connector 21 protrudes downward in the z direction. The lower portion of the connector 21 penetrates a first connector hole 33a2 of the main body 33 of the mounting unit 30 and a second connector hole 51a2 of the housing 51 of the second electronic device 50, and fits with a connector receiving portion (not shown) provided on the second substrate 53 of the second electronic device 50.

By connecting the connector 21 and the connector receiving portion of the second substrate 53, it becomes possible to supply power from the second electronic device 50 to the electronic components provided on the first substrate 17, to transmit signal from the antenna element 15 to the second electronic device 50, to transmit signal from the second electronic device 50 to the antenna element 15, and the like. However, instead of the connector 21, a cable (not shown) may be used for electrical connection with the first substrate 17.

The base 19 has the temporary fixing claw 22 that protrudes in a direction (x direction in the present embodiment) perpendicular to the z direction. The temporary fixing claw 22 is hooked to a vehicle mounting hole 91 of the vehicle roof 90. By this hooking, the temporary fixing claw 22 sandwiches the vehicle roof 90 between the temporary fixing claw 22 and the base 19, and the first electronic device 10 is temporarily fixed to the vehicle roof 90.

### (Configuration of mounting unit 30)

Next, each part of the mounting unit 30 will be described. The mounting unit 30 is interposed between the first electronic device 10 and the second electronic device 50.

### (Contact portion 31)

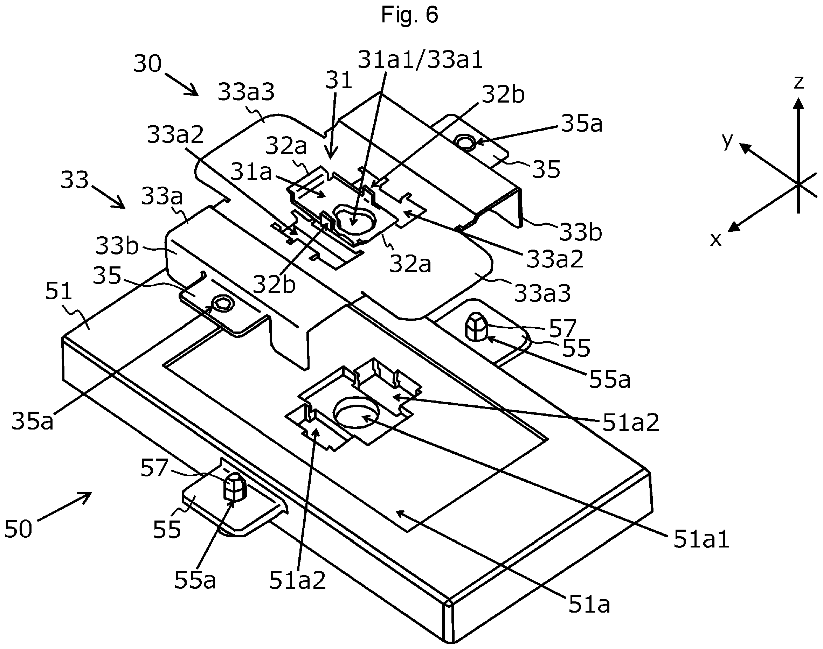

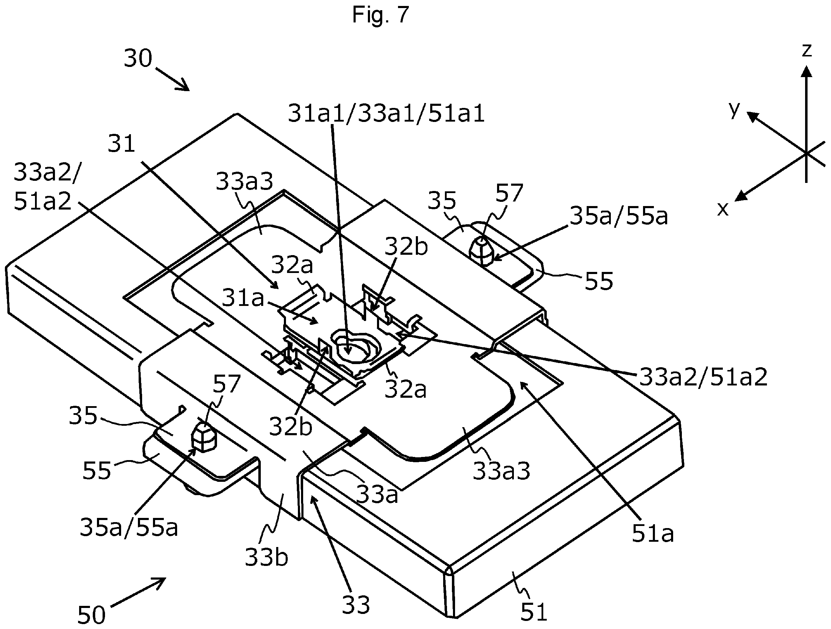

As shown in Figs. 6 and 7, the contact portion 31 has a first flat face portion 31a, the first claw portion 32a, and a second claw portion 32b. The contact portion 31 is provided at a position closer to the vehicle roof 90 than the main body 33.

The first flat face portion 31a has a substantially quadrangular shape and has a plane perpendicular to the z direction. The first flat face portion 31a has a first hole 31a1 through which the first fastening portion 37 penetrates.

The first hole 31a1 has a gourd shape (a shape combining a great circle and a small circle) including a tightening hole and an attachment/detachment hole larger than said tightening hole. The attachment/detachment hole of the first hole 31a1 has a size through which the head portion of the first fastening portion 37 passes. The tightening hole of the first hole 31a1 has an inner diameter substantially the same as the outer diameter of the shaft portion of the first fastening portion 37. In the present embodiment, the attachment/detachment hole of the first hole 31a1 is provided left of the tightening hole of the first hole 31a1 in the y direction when viewed from above in the z direction. However, the attachment/detachment hole and the tightening hole of the first hole 31a1 may be disposed in another positional relationship.

The first claw portion 32a extends upward in the z direction from the ends (left and right ends) of the first flat face portion 31a in the y direction. The first claw portion 32a has a plane perpendicular to the y direction. When the first electronic device 10 and the mounting unit 30 are connected in a positional relationship so as to sandwich the vehicle roof 90, an upper end portion of the first claw portion 32a contacts the vehicle roof 90 so that part of said upper end portion bites into the lower face of the vehicle roof 90. The first claw portions 32a are provided one by one at both ends of the first flat face portion 31a in the y direction.

The second claw portions 32b extends upward in the z direction from the end portions (front-rear ends) of the first flat face portion 31a in the x direction. The second claw portion 32b has a plane perpendicular to the x direction. When the mounting unit 30 is moved to the left in the y direction, after the first electronic device 10 is temporarily fixed to the vehicle roof 90 and the mounting unit 30 is inserted so as to be located between the two connectors 21 from below in the z direction, the second claw portion 32b functions as a stopper for the mounting unit 30. The second claw portions 32b are provided one by one at both ends of the first flat face portion 31a in the x direction.

### (Main body 33)

The main body 33 has a groove shape when viewed from the y direction. The main body 33 has a second flat face portion 33a and a leg 33b.

The second flat face portion 33a has a substantially quadrangular shape and has a plane perpendicular to the z direction. The upper face of the second flat face portion 33a is in contact with the lower face of the first flat face portion 31a. The second flat face portion 33a has a second hole 33a1 through which the first fastening portion 37 penetrates. The second flat face portion 33a has the first connector hole 33a2 through which the connector 21 penetrates. The two first connector holes 33a2 are provided in a positional relationship so as to sandwich the second hole 33a1 in the x direction. However, the first connector hole 33a2 may be disposed in a different positional relationship with respect to the second hole 33a1 according to the number of connectors 21, the position of the connector 21, or the like.

The second hole 33a1 has the same shape and size as the first hole 31a1. The second hole 33a1 has a gourd shape including a tightening hole and an attachment/detachment hole larger than said tightening hole. The attachment/detachment hole of the second hole 33a1 has a size through which the head portion of the first fastening portion 37 passes. The tightening hole of the second hole 33a1 has substantially the inner diameter same as the outer diameter of the shaft portion of the first fastening portion 37. In the present embodiment, the attachment/detachment hole of the second hole 33a1 is provided left of the tightening hole of the second hole 33a1 in the y direction when viewed from above in the z direction. However, the attachment/detachment hole and the tightening hole of the second hole 33a1 may be disposed in another positional relationship.

When the mounting unit 30 is attached to the vehicle roof 90 after the first electronic device 10 is temporarily fixed to the vehicle roof 90, the head portion of the first fastening portion 37 passed through the attachment/detachment hole of the first hole 31a1 and the attachment/detachment hole the second hole 33a1. After temporary fixing, the mounting unit 30 is moved so that the shaft portion of the first fastening portion 37 is located from the region where the attachment/detachment hole of the first hole 31a1 and the attachment/detachment hole of the second hole 33a1 are present to the region where the tightening hole of the first hole 31a1 and the tightening hole of the second hole 33a1 are present. After the movement, the first electronic device 10 is fastened to the vehicle roof 90.

The contact portion 31 is attached to the main body 33 in a positional relationship in which the first hole 31a1 and the second hole 33a1 overlap in the z direction. The form in which the second hole 33a1 has the same shape and size as the first hole 31a1 is described. However, the second hole 33a1 may be formed of a substantially quadrangular hole so that the first flat face portion 31a of the contact portion 31 fits. In this case, the contact portion 31 is fitted into the second hole 33a1.

The second flat face portion 33a has a pair of plate-shaped sections 33a3 extending in the y direction. The distal end portion of the plate-shaped section 33a3 is formed so as to be located below in the z direction compared to a central portion of the second flat face portion 33a, said central portion being contact with the contact portion 31.

Due to the inclination of the plate-shaped section 33a3, after the second electronic device 50 is attached to the mounting unit 30, the distal end portion of the plate-shaped section 33a3 pushes an upper face recess 51a of the second electronic device 50 downward in the z direction. As a result, the distal end portion of the plate-shaped section 33a3 is maintained in contact with the housing 51 of the second electronic device 50, and an abnormal noise between the mounting unit 30 and the second electronic device 50 due to the vibration of the vehicle or the like can be suppressed.

The leg 33b extends downward in the z direction from the end portion of the second flat face portion 33a in the x direction. The leg 33b has a plane perpendicular to the x direction. At least a pair of legs 33b is provided at both ends of the second flat face portion 33a in the x direction. However, a pair of legs 33b may be provided at both ends of the second flat face portion 33a in the y direction. Further, at least one leg 33b may be provided at the end portion in the x direction or the end portion in the y direction of the second flat face portion 33a.

### (First arm 35)

The first arm 35 has a plane perpendicular to the z direction. One of the first arms 35 protrudes and extends forward in the x direction from the front face of the leg 33b. The other of the first arms 35 protrudes and extends rearward in the x direction from the rear face of the leg 33b. The first arm 35 is provided below the second flat face portion 33a in the z direction. That is, the first arm 35 is provided at a position farther away from the vehicle roof 90 than the second flat face portion 33a. The first arm 35 has a first arm hole 35a. The second fastening portion 57 penetrates the first arm hole 35a.

### (Configuration of main body 33 and first arm 35)

The main body 33 and the first arm 35 are integrally made of metal. For example, the main body 33 and the first arm 35 are formed by bending or the like of a metal plate-shaped member. However, one portion, of the second flat face portion 33a of the main body 33, in contact with the contact portion 31 may be made of metal, and the other portion may be made of non-metal such as resin.

### (Configuration of contact portion 31 and main body 33)

The contact portion 31 and the main body 33 are formed as separate bodies and are connected by adhesion, welding, or the like. However, the contact portion 31 and the main body 33 may be integrally formed of metal.

### (Non-contact of main body 33)

It is desirable that the dimensions or the like of the contact portion 31 and the main body 33 are determined in a positional relationship in which the main body 33 does not come into contact with the vehicle roof 90. In this case, the main body 33 covers part of the second electronic device 50 from above in the z direction in a positional relationship so as not to come into contact with the vehicle roof 90. As a result, it can become in a state in which there is no electrical connection between the mounting unit 30 and the vehicle roof 90 at a location other than the contact portion 31. Further, for the purpose of temporarily preventing the main body 33 from coming into contact with the vehicle roof 90 due to vehicle vibration or the like, a cushioning material (not shown) composed of an insulating member between the main body 33 and the vehicle roof 90 may be provided.

### (First fastening portion 37)

The first fastening portion 37 is composed of bolts or the like and is used for screwing with the protrusion 19a of the base 19. In the present embodiment, an example in which the first fastening portion 37 is a bolt is shown. By screwing the base 19 and the first fastening portion 37, the first electronic device 10 and the mounting unit 30 are connected in a positional relationship in which the vehicle roof 90 is sandwiched therebetween.

### (Configuration of second electronic device 50)

Next, each part of the second electronic device 50 will be described.

### (Housing 51)

The housing 51 has a substantially rectangular parallelepiped shape and incorporates the second substrate 53. The center portion of the upper face of the housing 51 has the upper face recess 51a recessed downward in the z direction relative to the peripheral edge portion of the upper face.

The upper face recess 51a has a fastening portion accommodation portion 51a1. The fastening portion accommodation portion 51a1 is a recess provided in the upper face recess 51a. The fastening portion accommodation portion 51a1 is provided at a position facing the second hole 33a1 in the z direction when the second electronic device 50 is attached to the mounting unit 30. The fastening portion accommodation portion 51a1 accommodates the head portion of the bolt constituting the first fastening portion 37.

Further, the upper face recess 51a has a second connector hole 51a2 through which the connector 21 penetrates. The second connector hole 51a2 is provided at a position facing the first connector hole 33a2 in the z direction when the second electronic device 50 is attached to the mounting unit 30. Two second connector holes 51a2 are provided in a positional relationship so as to sandwich the fastening portion accommodation portion 51a1 in the x direction. However, the second connector hole 51a2 may be disposed in a different positional relationship with respect to the fastening portion accommodation portion 51a1 according to the number of connectors 21 and the position of the connector 21.

### (Second substrate 53)

The second substrate 53 is connected to the gateway ECU of the vehicle via an in-vehicle LAN cable (not shown). The second substrate 53 converts a digital signal and an analog signal into each other. Specifically, the second substrate 53 transmits and receives the signal received by the antenna element 15 and the signal transmitted by the antenna element 15 to and from the gateway ECU as digital signals.

The gateway ECU transmits and receives signals to and from electronic devices installed in the vehicle, such as an information processing device, via the in-vehicle LAN. The information processing device is a device such as a car navigation system or an audio device that outputs information as audio, video, or the like.

The second substrate includes, for example, an FM/AM tuner, a communication module, a position calculation module, a V2X module, an SXM/DAB module, and the like.

### (Second arm 55)

The second arm 55 has a plane perpendicular to the z direction. One of the second arms 55 protrudes and extends forward from the front face of the housing 51 in the x direction. The other of the second arms 55 protrudes and extends rearward from the rear face of the housing 51 in the x direction.

The second arm 55 is provided below the upper face of the housing 51 in the z direction. That is, the second arm 55 is provided at a position farther away from the vehicle roof 90 than the upper face of the housing 51. The second arm 55 has a second arm hole 55a through which the second fastening portion 57 penetrates. The second arm hole 55a is provided at a position facing the first arm hole 35a in the z direction when the second electronic device 50 is attached to the mounting unit 30. The second fastening portion 57 is attached to the second arm 55 before the device for vehicle 1 is attached to the vehicle roof 90.

### (Second fastening portion 57)

The second fastening portion 57 is composed of a clip or the like, and penetrates the second arm hole 55a and the first arm hole 35a from below in the z direction. The second electronic device 50 is fixed to the mounting unit 30 by the second fastening portion 57 penetrating the second arm hole 55a and the first arm hole 35a.

### (Installation procedure)

Next, the procedure for attaching the device for vehicle 1 to the vehicle roof 90 will be described. The first electronic device 10 has been assembled in advance. In addition, the mounting unit 30 has been assembled. In addition, the second electronic device 50 has been assembled. The second fastening portion 57 has been inserted into the second arm hole 55a from below in the z direction.

First, the connector 21 of the first electronic device 10, the protrusion 19a of the base 19, and the first fastening portion 37 are inserted into the vehicle mounting hole 91 of the vehicle roof 90 from above in the z direction. The temporary fixing claw 22 is hooked to the peripheral edge portion of the vehicle mounting hole 91, and the first electronic device 10 is temporarily fixed to the vehicle roof 90 (first step, see Fig. 1).

Next, the mounting unit 30 is inserted from below in the z direction so that the contact portion 31 of the mounting unit 30 is in the vehicle mounting hole 91 and is located between the two connectors 21. At this time, the second electronic device 50 is inserted so as to be in the following two states. (1) The connector 21 is in a state of penetrating the first connector hole 33a2 of the main body 33. (2) The first fastening portion 37 is in a state of penetrating the attachment/detachment hole of the first hole 31a1 of the contact portion 31 and the attachment/detachment hole of the second hole 33a1 of the main body 33. After inserting the mounting unit 30, the mounting unit 30 is pushed to the left in the y direction, so that the shaft portion of the first fastening portion 37 fits into the tightening hole of the first hole 31a1 and the tightening hole of the second hole 33a1.

The inner diameters of the tightening hole of the first hole 31a1 and the tightening hole of the second hole 33a1 are smaller than the horizontal width of the head portion of the first fastening portion 37. Therefore, the mounting unit 30 is not likely to fall from the first electronic device 10 even before the screwing by the first fastening portion 37 is performed. It is desirable that the size of the first connector hole 33a2 be determined so that a gap is formed between the first connector hole 33a2 and the connector 21 in the y direction in order to prevent the connector 21 from contacting the peripheral edge portion of the first connector hole 33a2 when moving the mounting unit 30 to the left in the y direction.

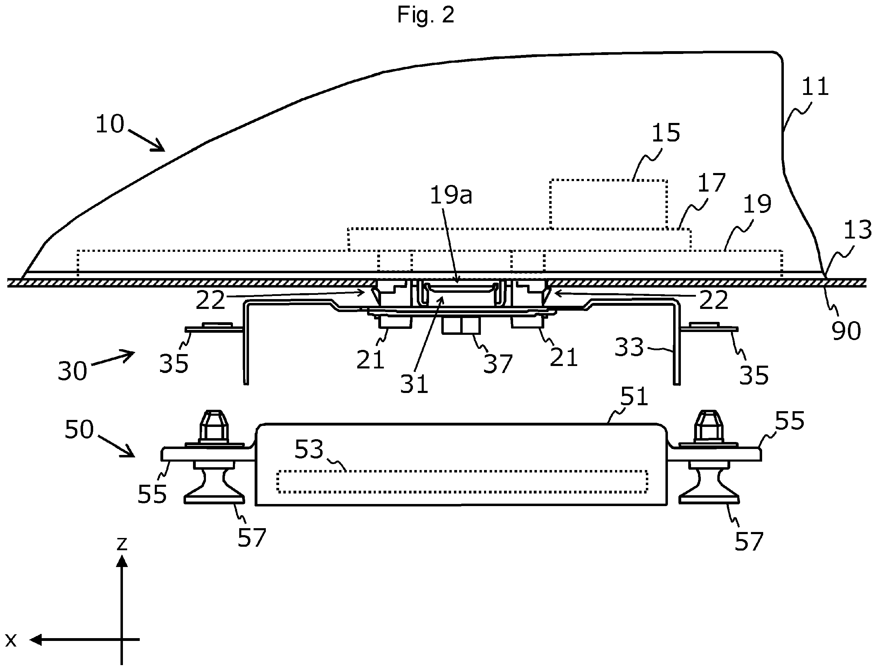

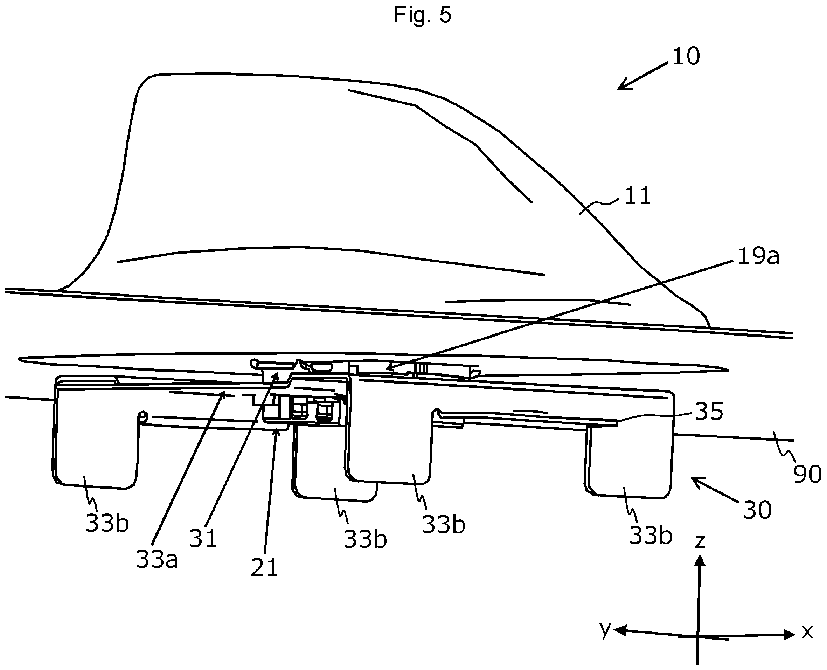

After that, the first fastening portion 37 is screwed with the protrusion 19a of the base 19 of the first electronic device 10 (second step, see Figs. 2 and 5). As a result, the first electronic device 10 and the mounting unit 30 are fixed to the vehicle roof 90 in a positional relationship in which the first electronic device 10 and the mounting unit 30 sandwich at least part of the vehicle roof 90 in the z direction. Further, by tightening the first fastening portion 37, the first claw portion 32a of the contact portion 31 is connected to the vehicle roof 90.

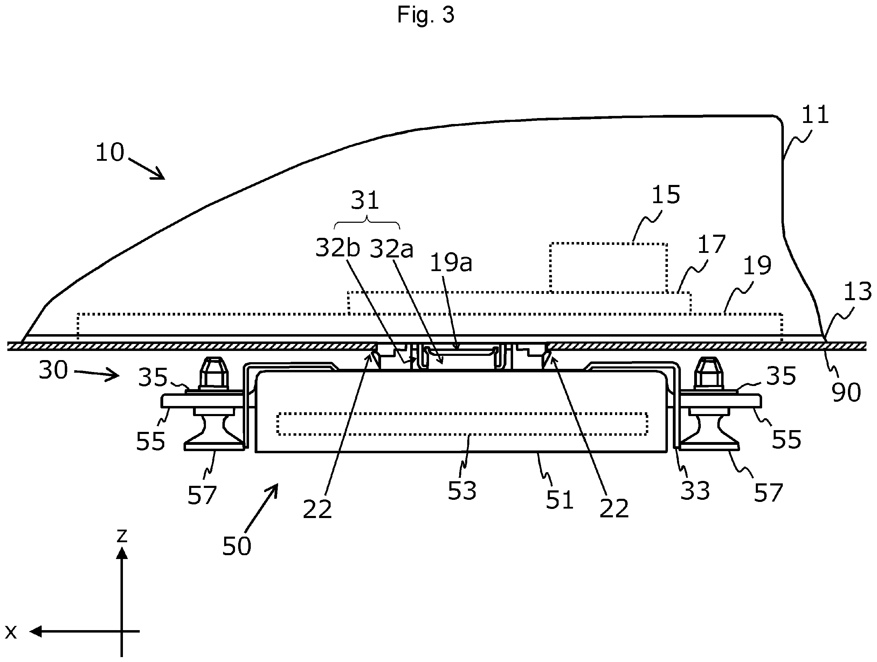

The second electronic device 50 is then inserted between the two legs 33b. At this time, the second electronic device 50 is inserted so as to be in the following four states. (1) The connector 21 is in a state of penetrating the second connector hole 51a2 of the housing 51. (2) The connector is in a state of being connected to the connector receiving portion (not shown) provided on the second substrate 53. (3) The head portion of the first fastening portion 37 is in a state of being accommodated in the fastening portion accommodation portion 51a1 of the housing 51. (4) The first arm hole 35a of the first arm 35 and the second arm hole 55a of the second arm 55 are in a state of facing each other in the z direction. Further, the second fastening portion 57 is inserted into the first arm hole 35a of the first arm 35 and is hooked (third step, see Figs. 3 and 4). As a result, the second electronic device 50 is fixed to the mounting unit 30 in a positional relationship in which the second electronic device 50 and the vehicle roof 90 sandwich at least part of the mounting unit 30 in the z direction. Installation of the device for vehicle 1 on the vehicle roof 90 is completed.

### (Effects)

Using the mounting unit 30 provided between the second electronic device 50 and the vehicle roof 90, the first electronic device 10 is fixed to the vehicle roof 90 in the first stage (first step, second step), and the second electronic device 50 is fixed to the mounting unit 30 in the second stage (third step). As a result, the device for vehicle 1 including the first electronic device 10 and the second electronic device 50 can be easily attached to the vehicle.

Further, when the first electronic device 10 and the second electronic device 50 are attached via the mounting unit 30, the electrical connection (grounding) between the first electronic device 10 and the vehicle roof 90 and the electrical connection between the first electronic device 10 and the second electronic device 50 can be made at the same time.

Further, the contact portion 31 of the mounting unit 30 functions as a washer with a claw. Therefore, when the first electronic device 10 is used as the antenna unit, a configuration in which the second electronic device (signal processing unit) 50 is not included, and which has substantially the same configuration as a normal antenna device can be used as the first electronic device 10.

The head portion of the first fastening portion 37 is accommodated in the fastening portion accommodation portion 51a1 of the housing 51. Therefore, after the installation is completed, it can become in a state in which the head portion of the first fastening portion 37 is difficult to be touched from the outside, and it is possible to prevent the tightening of the first fastening portion 37 from being loose.

The first arm 35 provided on the leg 33b becomes in a state where the distal end portion of the first arm 35 can move (flap) around the connection portion between the first arm 35 and the leg 33b due to elastic deformation. Therefore, it is possible to reduce the force applied to the connector 21 when the second electronic device 50 moves due to the vibration of the vehicle or the like.

The first arm 35 is provided below the second flat face portion 33a in the z direction. Therefore, it is possible to provide a space for the distal end portion of the second fastening portion 57 such as a clip to protrude between the first arm 35 and the vehicle roof 90.

A pair of legs 33b is provided in a positional relationship so as to sandwich the second electronic device 50 in the front-rear direction or the left-right direction. Therefore, when the second electronic device 50 is attached to the mounting unit 30, the legs 33b function as a guide, and fitting of the connector 21, positioning and the like can be easily performed.

### (Example of application to other than antenna device)

In the present embodiment, the device for vehicle 1 is described as an antenna device for vehicle, and an example in which the first electronic device 10 is the antenna unit, and the second electronic device 50 is the signal processing unit is described.

However, the device for vehicle 1 is not limited to these configurations. For example, it is conceivable that the first electronic device 10 is an imaging device such as a rearward checking camera, and the second electronic device 50 is a signal processing unit that performs an image process of data obtained by said imaging device. In addition, a form in which the first electronic device 10 is a signal processing unit and the second electronic device 50 is an antenna unit is also conceivable.

### (Application example of arrangement of first electronic device 10)

Further, in the present embodiment, an example in which the first electronic device 10 is disposed outside of the vehicle, the second electronic device 50 is disposed inside of the vehicle, and the first electronic device 10 and the mounting unit 30 are attached in a positional relationship so as to sandwich the vehicle roof 90, and then the second electronic device 50 is attached to the mounting unit 30 is described.

However, the device for vehicle 1 is not limited to these configurations. For example, a form in which the first electronic device 10 and the second electronic device 50 are disposed inside the vehicle, the first electronic device 10 and the mounting unit 30 are attached in a positional relationship so as to sandwich a wall-shaped member (mounting object) of the vehicle, and then the second electronic device 50 is attached to the mounting unit 30 may be conceivable.

### (Application example of arrangement of second electronic device 50)

Further, in the present embodiment, an example in which the first electronic device 10, the mounting unit 30, and the second electronic device 50 are disposed in a straight line such as in the z direction, that is, the second electronic device 50 is located below the first electronic device 10 in the z direction is described.

However, the arrangement of the first electronic device 10, the mounting unit 30, and the second electronic device 50 is not limited to this. For example, it is conceivable that the second electronic device 50 is disposed at a position below the first electronic device 10 in the z direction and shifted forward in the x direction or to the right in the y direction, and is attached to the mounting unit 30.

Although some embodiments of the present invention have been described, these embodiments are presented as examples and are not intended to limit the scope of the invention. These embodiments can be implemented in various other forms, and various omissions, replacements, and changes can be made without departing from the gist of the invention. These embodiments and modifications thereof are included in the scope and gist of the invention, as well as in the scope of the invention described in the claims and the equivalent scope thereof.

### Reference Signs List

1 device for vehicle (antenna device for vehicle)
10 first electronic device (antenna unit)
11 antenna case
13 pad
15 antenna element
17 first substrate
19 base
19a protrusion
21 connector
22 temporary fixing claw
30 mounting unit
31 contact portion (washer with claw)
31a first flat face portion
31a1 first hole
32a first claw portion (vehicle connection)
32b second claw portion (base connection)
33 main body (bracket)
33a second flat face portion
33a1 second hole
33a2 first connector hole
33a3 plate-shaped section
33b leg
35 first arm
35a first arm hole
37 first fastening portion (bolt)
50 second electronic device (signal processing unit)
51 housing
51a upper face recess
51a1 fastening portion accommodation portion
51a2 second connector hole
53 second substrate
55 second arm
55a second arm hole
57 second fastening portion
90 Vehicle roof
91 vehicle mounting hole

## Claims

1. A device for vehicle comprising:
a first electronic device;
a second electronic device electrically connected to the first electronic device; and
a mounting unit interposed between the first electronic device and the second electronic device, wherein
the first electronic device is attached to a vehicle in a positional relationship in which the first electronic device and the mounting unit sandwich at least part of a wall-shaped member of the vehicle, and
the second electronic device is attached to the mounting unit in a positional relationship in which the second electronic device and the wall-shaped member sandwich at least part of the mounting unit.

2. The device for vehicle according to claim 1, wherein the first electronic device is electrically connected to at least part of the wall-shaped member via the mounting unit.

3. The device for vehicle according to claim 2, wherein the wall-shaped member is a roof of the vehicle, and the mounting unit includes a main body that covers part of the second electronic device in a positional relationship in which the main body does not come into contact with the roof, and a contact portion that is provided at a position closer to the roof than the main body and comes into contact with the roof.

4. The device for vehicle according to claim 3, wherein an upper face of the second electronic device has a recess that accommodates part of a first fastening portion that fastens the first electronic device and the mounting unit.

5. The device for vehicle according to claim 3, wherein
the main body has a leg that extends downward and faces a side of the second electronic device,
the leg has a first arm,
a second arm is provided on the side of the second electronic device, and
the second electronic device is attached to the mounting unit via a second fastening portion that penetrates the first arm and the second arm from below.

6. The device for vehicle according to claim 5, wherein
the main body has a flat face portion facing an upper face of the second electronic device, and
the first arm is provided at a position lower than the flat face portion.

7. The device for vehicle according to claim 5, wherein at least a pair of the legs is provided in a positional relationship so as to sandwich the second electronic device.

8. The device for vehicle according to claim 5, wherein
the main body has a flat face portion facing an upper face of the second electronic device,
the flat face portion has a plate-shaped section, and
a distal end portion of the plate-shaped section is formed so as to be located below compared to a region, of the flat face portion, in contact with the contact portion.

9. A mounting unit of a device for vehicle comprising: a first electronic device; and a second electronic device that is electrically connected to the first electronic device, wherein
the first electronic device is attached to a vehicle in a positional relationship in which the first electronic device and the mounting unit sandwich at least part of a wall-shaped member of the vehicle, and
the second electronic device is attached to the mounting unit in a positional relationship in which the second electronic device and the wall-shaped member sandwich at least part of the mounting unit.
